(19) Europäisches Patentamt
European Patent Office
Office européen des brevets

(11) **EP 4 223 838 A1**

(12) **EUROPEAN PATENT APPLICATION**
published in accordance with Art. 153(4) EPC

(43) Date of publication:
**09.08.2023 Bulletin 2023/32**

(21) Application number: **21875082.6**

(22) Date of filing: **03.09.2021**

(51) International Patent Classification (IPC):
*C08L 21/00* (2006.01)     *C08J 3/20* (2006.01)
*C08K 3/04* (2006.01)     *C08K 5/10* (2006.01)
*C08K 7/00* (2006.01)

(52) Cooperative Patent Classification (CPC):
**C08J 3/20; C08K 3/04; C08K 5/10; C08K 7/00;
C08L 21/00**

(86) International application number:
**PCT/JP2021/032552**

(87) International publication number:
**WO 2022/070780 (07.04.2022 Gazette 2022/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.09.2020   JP 2020166553**

(71) Applicant: **Zeon Corporation
Tokyo 100-8246 (JP)**

(72) Inventors:
• **UENO, Masahiro
Tokyo 100-8246 (JP)**
• **TAKEYAMA, Yoshihisa
Tokyo 100-8246 (JP)**

(74) Representative: **Maiwald GmbH
Elisenhof
Elisenstraße 3
80335 München (DE)**

(54) **ELASTOMER COMPOSITION, METHOD FOR PRODUCING ELASTOMER COMPOSITION,
CROSSLINKED PRODUCT, AND MOLDED BODY**

(57)     An elastomer composition contains an elastomer, carbon nanotubes, and a compound A. The compound A is a compound that has a vapor pressure at 25°C of 1.0 kPa or less and includes an aromatic ring. A Hansen solubility parameter distance R1 between the carbon nanotubes and the compound A is 6.0 MPa$^{1/2}$ or less, and a Hansen solubility parameter distance R2 between the elastomer and the compound A is larger than R1.

EP 4 223 838 A1

**Description**

TECHNICAL FIELD

The present disclosure relates to an elastomer composition, a method of producing an elastomer composition, a cross-linked material, and a shaped object, and, in particular, relates to an elastomer composition and the like that make it possible to obtain a shaped object having better dispersion of carbon nanotubes in an elastomer.

BACKGROUND

Elastomer compositions in which a carbon material is compounded with an elastomer are conventionally used as materials having excellent characteristics such as electrical conductivity, thermal conductivity, and strength. In recent years, carbon nanotubes (hereinafter, also abbreviated as "CNTs") have attracted attention as carbon materials that are highly effective for improving the aforementioned characteristics.

Although CNTs have excellent characteristics individually, they have a high tendency to form bundles due to Van der Waals forces when used as a bulk material due to the small external diameter thereof. For this reason, when a shaped object is to be produced using an elastomer composition containing an elastomer and CNTs, it is desirable that bundle structures of the CNTs are disentangled and the CNTs are dispersed well in a matrix of the elastomer. Note that that the term "carbon nanotubes (CNTs)" as used in the present disclosure indicates that a plurality of carbon nanotubes are included.

Patent Literature (PTL) 1 discloses that CNTs can be dispersed well in a matrix of a polymer by performing kneading of a composition containing the polymer, the CNTs, and an organic solvent such as methyl ethyl ketone in a carbon dioxide atmosphere that is in a subcritical state or a supercritical state.

CITATION LIST

Patent Literature

PTL 1: JP2018-203914A

SUMMARY

(Technical Problem)

Although it is disclosed that CNTs can be dispersed in an elastomer through the technique described in PTL 1, there is demand for a new technique that enables better dispersion of CNTs in an elastomer and production of a shaped object having various excellent characteristics.

An object of the present disclosure is to provide a new technique for obtaining a shaped object having better dispersion of carbon nanotubes in an elastomer.

(Solution to Problem)

As a result of diligent investigation aimed at achieving the object set forth above, the inventors discovered that it is possible to produce a shaped object having good dispersion of CNTs in an elastomer by using an elastomer composition containing an elastomer and CNTs and also containing a compound A that has a vapor pressure of not more than a specific value, that includes an aromatic ring, and for which a Hansen solubility parameter distance between the compound A and the elastomer and a Hansen solubility parameter distance between the compound A and the CNTs each satisfy a specific condition. In this manner, the inventors completed the present disclosure.

A presently disclosed elastomer composition comprises an elastomer, carbon nanotubes, and a compound A, wherein the compound A is a compound that has a vapor pressure at 25°C of 1.0 kPa or less and includes an aromatic ring, a Hansen solubility parameter distance R1 between the carbon nanotubes and the compound A is 6.0 $MPa^{1/2}$ or less, and a Hansen solubility parameter distance R2 between the elastomer and the compound A is larger than R1. By using a composition having a configuration such as set forth above, it is comparatively simple to obtain a shaped object having better dispersion of CNTs in an elastomer.

The elastomer composition preferably comprises not less than 0.1 parts by mass and not more than 60 parts by mass of the compound A per 100 parts by mass of the elastomer. Through the content of the compound A being within the range set forth above, it is possible to obtain a shaped object having even better dispersion of CNTs in an elastomer.

The elastomer composition preferably comprises not less than 0.1 parts by mass and not more than 10 parts by mass of the carbon nanotubes per 100 parts by mass of the elastomer. Through the content of the CNTs being within the specific range set forth above, it is possible to obtain a shaped object having even better dispersion of CNTs in an elastomer and to cause this shaped object to sufficiently display expected characteristics (electrical conductivity, thermal conductivity, strength, etc.).

In the elastomer composition, the carbon nanotubes preferably include single-walled carbon nanotubes. By using an elastomer composition that contains single-walled CNTs as CNTs, it is possible to obtain a shaped object having even better characteristics such as electrical conductivity, thermal conductivity, and strength.

In the elastomer composition, the compound A is preferably a phenyl ester compound. Through a configuration such as set forth above, it is possible to obtain a shaped object having even better dispersion of CNTs in an elastomer.

The elastomer composition can further comprise a cross-linker. By using an elastomer composition that contains a cross-linker, it is possible to obtain a shaped object as a cross-linked object having excellent strength and the like when cross-linking is performed.

A presently disclosed method of producing an elastomer composition is a method of producing the elastomer composition set forth above, comprising: a step of mixing the carbon nanotubes and the compound A to obtain a mixture; and a step of performing dispersing treatment of a composition in which the mixture and the elastomer are combined. Through a configuration such as set forth above, it is possible to obtain an elastomer composition having good disentanglement of bundle structures of CNTs, and by using this elastomer composition, it is possible to obtain a shaped object having sufficiently good dispersion of CNTs in an elastomer.

A presently disclosed cross-linked material is obtained through cross-linking of the elastomer composition set forth above that contains a cross-linker. Through a configuration such as set forth above, the obtained cross-linked material has excellent characteristics such as electrical conductivity, thermal conductivity, and strength due to the CNTs being dispersed well in the elastomer.

A presently disclosed shaped object is obtained through shaping of the cross-linked material set forth above. Through a configuration such as set forth above, the obtained shaped object has excellent characteristics such as electrical conductivity, thermal conductivity, and strength due to the CNTs being dispersed well in the elastomer.

(Advantageous Effect)

According to the present disclosure, it is possible to provide an elastomer composition and method of producing the same that make it possible to form a shaped object having better dispersion of carbon nanotubes in an elastomer. Moreover, according to the present disclosure, it is possible to provide a cross-linked material and a shaped object having good dispersion of carbon nanotubes in an elastomer.

DETAILED DESCRIPTION

The following provides a detailed description of embodiments of the present disclosure.

The presently disclosed elastomer composition can be used to produce the presently disclosed shaped object. Moreover, the presently disclosed elastomer composition can be produced by the presently disclosed method of producing an elastomer composition, for example.

(Elastomer composition)

The presently disclosed elastomer composition contains an elastomer, CNTs, and a compound A and may optionally contain a cross-linker, additives, and so forth.

The compound A is a compound that has a vapor pressure at 25°C of 1.0 kPa or less and includes an aromatic ring. Moreover, a Hansen solubility parameter distance R1 between the CNTs and the compound A is 6.0 MPa$^{1/2}$ or less, and a Hansen solubility parameter distance R2 between the elastomer and the compound A is larger than R1. The presently disclosed elastomer composition makes it possible to obtain a shaped object having better dispersion of CNTs in an elastomer as a result of the compound A set forth above being used.

Although the reason for this is not clear, it is presumed to be as follows. In the presently disclosed elastomer composition, the compound A and the CNTs have excellent affinity, and the compound A can impregnate bundle structures of the CNTs and thereby promote disentanglement of the bundle structures as a result of the Hansen solubility parameter distance R1 between the CNTs and the compound A having a value that is not more than the specific value set forth above and as a result of the compound A including an aromatic ring. Moreover, the compound A can be caused to display better affinity with the CNTs than with the elastomer, and disentanglement of bundle structures through the compound A described above is not excessively impaired by the presence of the elastomer because the Hansen solubility parameter distance R2 between the elastomer and the compound A has a value that is larger than the value of R1 described above. Consequently, it is thought that by using the elastomer composition set forth above, bundle structures of CNTs are sufficiently disentangled, making it possible to obtain a shaped object having good dispersion of CNTs in an elastomer.

<Elastomer>

The elastomer may be any rubber, resin, or mixture thereof, for example, without any specific limitations.
Specifically, the rubber may be natural rubber; fluororubber such as vinylidene fluoride rubber (FKM), tetrafluoroethylene-propylene rubber (FEPM), or tetrafluoroethylene-perfluoro vinyl ether rubber (FFKM); diene rubber such as butadiene rubber (BR), isoprene rubber (IR), styrene-butadiene rubber (SBR), hydrogenated styrene-butadiene rubber (H-SBR), nitrile rubber (NBR), or hydrogenated nitrile rubber (H-NBR); silicone rubber; or the like, for example, without any specific limitations.
Moreover, the resin may be a fluororesin such as polytetrafluoroethylene (PTFE); an acrylic resin such as polymethyl methacrylate (PMMA); polystyrene (PS); polycarbonate (PC); or the like, for example, without any specific limitations.
Of the examples described above, fluororubber such as vinylidene fluoride rubber (FKM), tetrafluoroethylene-propylene rubber (FEPM), or tetrafluoroethylene-perfluoro vinyl ether rubber (FFKM); nitrile rubber (NBR); hydrogenated nitrile rubber (H-NBR); a fluororesin such as polytetrafluoroethylene; an acrylic resin such as polymethyl methacrylate; polystyrene; or polycarbonate is preferable as the elastomer, and FKM, FEPM, H-NBR, PTFE, PMMA, PS, or PC is more preferable as the elastomer. By using an elastomer composition that contains at least any one of these elastomers, it is possible to obtain a shaped object having better dispersion of CNTs in an elastomer.
Note that one of these elastomers can be used individually, or two or more of these elastomers can be used as a mixture.

<Carbon nanotubes>

The CNTs include a plurality of carbon nanotubes.
No specific limitations are placed on the type of CNTs, and single-walled carbon nanotubes or multi-walled carbon nanotubes may be included. The CNTs preferably include carbon nanotubes having a comparatively small number of walls (i.e., 1 to 5 walls), and more preferably include single-walled carbon nanotubes. In this case, it is more preferable that the CNTs mainly include carbon nanotubes having from 1 to 5 walls, and even more preferable that the CNTs mainly include single-walled carbon nanotubes. This is because the inclusion of CNTs having a comparatively small number of walls, and particularly the inclusion of single-walled CNTs results in improvement of characteristics (for example, electrical conductivity, thermal conductivity, strength, etc.) of a shaped object even with a small amount of the CNTs. Note that the phrase "mainly include" as used above means include in a number exceeding half of the total number of carbon nanotubes.
The average diameter of the CNTs is preferably 1 nm or more, and is preferably 60 nm or less, more preferably 30 nm or less, and even more preferably 10 nm or less. When the average diameter of the CNTs is within any of the ranges set forth above, characteristics (for example, electrical conductivity, thermal conductivity, strength, etc.) of a shaped object can be sufficiently improved.
The "average diameter" of the CNTs referred to in the present disclosure can be determined by measuring the diameters (external diameters) of 20 CNTs, for example, in a transmission electron microscope (TEM) image, and then calculating a number-average value.
The CNTs are preferably CNTs for which a ratio $(3\sigma/Av)$ of a value $(3\sigma)$, which is obtained by multiplying the diameter standard deviation ($\sigma$: sample standard deviation) by 3, relative to the average diameter (Av) is more than 0.20 and less than 0.80, more preferably CNTs for which $3\sigma/Av$ is more than 0.25, and even more preferably CNTs for which $3\sigma/Av$ is more than 0.50. By using CNTs for which $3\sigma/Av$ is more than 0.20 and less than 0.80, it is possible to further improve characteristics (for example, electrical conductivity, thermal conductivity, strength, etc.) of a shaped object.
Note that the average diameter (Av) and the standard deviation ($\sigma$) of the CNTs may be adjusted by changing the production method or production conditions of the CNTs, or may be adjusted by combining a plurality of types of CNTs obtained by different production methods.
The CNTs that are typically used take a normal distribution when a plot is made of diameter measured as described above on a horizontal axis and probability density thereof on a vertical axis, and a Gaussian approximation is made.
The average length of the CNTs is preferably 10 $\mu$m or more, more preferably 50 $\mu$m or more, and even more preferably 80 $\mu$m or more, and is preferably 600 $\mu$m or less, more preferably 550 $\mu$m or less, and even more preferably 500 $\mu$m or less. When the average length of the CNTs is within any of the ranges set forth above, characteristics (for example, electrical conductivity, thermal conductivity, strength, etc.) of a shaped object can be sufficiently improved.

Note that the "average length" of the CNTs referred to in the present disclosure can be determined by measuring the lengths of 20 CNTs, for example, in a scanning electron microscope (SEM) image, and then calculating a number-average value.

The CNTs normally have an aspect ratio of more than 10. Note that the aspect ratio of the CNTs can be determined by measuring the diameters and lengths of 20 randomly selected CNTs using a scanning electron microscope or a transmission electron microscope and then calculating an average value of the ratio of diameter and length (length/diameter).

The BET specific surface area of the CNTs is preferably 600 $m^2/g$ or more, and more preferably 800 $m^2/g$ or more, and is preferably 2,000 $m^2/g$ or less, more preferably 1,800 $m^2/g$ or less, and even more preferably 1,600 $m^2/g$ or less. When the BET specific surface area of the CNTs is 600 $m^2/g$ or more, characteristics (for example, electrical conductivity, thermal conductivity, strength, etc.) of a shaped object can be sufficiently enhanced with a small amount of the CNTs. Moreover, when the BET specific surface area of the CNTs is 2,000 $m^2/g$ or less, bundle structures of the CNTs can be disentangled well. Herein, the term "BET specific surface area" refers to nitrogen adsorption specific surface area measured by the BET method.

A t-plot for the CNTs obtained from an adsorption isotherm preferably exhibits a convex upward shape. Note that a "t-plot" can be obtained by, in an adsorption isotherm of the CNTs measured by the nitrogen gas adsorption method, converting the relative pressure to an average thickness t (nm) of an adsorbed layer of nitrogen gas. Specifically, an average adsorbed nitrogen gas layer thickness t corresponding to a given relative pressure is determined from a known standard isotherm of average adsorbed nitrogen gas layer thickness t plotted against relative pressure P/P0, and the above-described conversion is made to obtain a t-plot for the CNTs (t-plot method of de Boer et al.). Note that the CNTs for which a t-plot obtained from an adsorption isotherm exhibits a convex upward shape are preferably CNTs that have not undergone opening formation treatment.

In a substance having pores at its surface, the growth of the adsorbed layer of nitrogen gas is categorized into the following processes (1) to (3). The gradient of the t-plot changes in accordance with processes (1) to (3).

(1) A process in which a single molecule adsorption layer of nitrogen molecules is formed over the entire surface
(2) A process in which a multi-molecule adsorption layer is formed and is accompanied by capillary condensation filling of pores
(3) A process in which a multi-molecule adsorption layer is formed at a surface that appears to be non-porous due to the pores being filled by nitrogen

In a t-plot having a convex upward shape, the plot is on a straight line passing through the origin in a region in which the average adsorbed nitrogen gas layer thickness t is small, but, as t increases, the plot deviates downward from the straight line. When CNTs have a t-plot shape such as described above, this indicates that the CNTs have a large ratio of internal specific surface area relative to total specific surface area and that numerous openings are formed in the CNTs.

A bending point of the t-plot for the CNTs is preferably within a range of $0.2 \leq t$ (nm) $\leq 1.5$, more preferably within a range of $0.45 \leq t$ (nm) $\leq 1.5$, and even more preferably within a range of $0.55 \leq t$ (nm) $\leq 1.0$. When the bending point of the t-plot for the CNTs is within any of these ranges, characteristics (for example, electrical conductivity, thermal conductivity, strength, etc.) of a shaped object can be enhanced with a small amount of the CNTs. The "position of the bending point" is defined as an intersection point of a linear approximation A for the above-described process (1) and a linear approximation B for the above-described process (3).

A ratio (S2/S1) of internal specific surface area S2 of the CNTs relative to total specific surface area S1 of the CNTs determined from the t-plot is preferably not less than 0.05 and not more than 0.30. When the value of S2/S1 for the CNTs is within this range, characteristics (for example, electrical conductivity, thermal conductivity, strength, etc.) of a shaped object can be enhanced with a small amount of the CNTs.

The total specific surface area S 1 and the internal specific surface area S2 of the CNTs can be determined from the t-plot for the CNTs. Specifically, the total specific surface area S1 and external specific surface area S3 can first be determined from the gradient of the linear approximation of process (1) and the gradient of the linear approximation of process (3), respectively. The internal specific surface area S2 can then be calculated by subtracting the external specific surface area S3 from the total specific surface area S1.

Measurement of an adsorption isotherm of the CNTs, preparation of a t-plot, and calculation of the total specific surface area S1 and the internal specific surface area S2 based on t-plot analysis can be performed using a BELSORP®-mini (BELSORP is a registered trademark in Japan, other countries, or both), for example, which is a commercially available measurement apparatus produced by Bel Japan Inc.

The CNTs preferably have a radial breathing mode (RBM) peak when evaluated by Raman spectroscopy. Note that an RBM is not present in the Raman spectrum of multi-walled CNTs having three or more walls.

A ratio (G/D ratio) of G-band peak intensity relative to D-band peak intensity in a Raman spectrum of the CNTs is preferably not less than 0.5 and not more than 5.0, can be set as 1.0 or more, and may be set as 4.0 or less. When the G/D ratio is not less than 0.5 and not more than 5.0, characteristics (for example, electrical conductivity, thermal conductivity, strength, etc.) of a shaped object can be further improved.

The CNTs can be produced by a known CNT synthesis method such as arc discharge, laser ablation, or chemical vapor deposition (CVD) without any specific limitations. More specifically, the CNTs can be efficiently produced, for example, in accordance with a method in which, during synthesis of CNTs by chemical vapor deposition (CVD) by supplying a feedstock compound and a carrier gas onto a substrate having a catalyst layer for CNT production at the surface thereof, a trace amount of an oxidant (catalyst activating material) is provided in the system in order to dramatically improve the catalytic activity of the catalyst layer (super growth method; refer to WO2006/011655A1). Hereinafter, CNTs that are obtained by the super growth method are also referred to as "SGCNTs".

CNTs that are produced by the super growth method may consist of only SGCNTs or may include other carbon nanostructures such as non-circular tube-shaped carbon nanostructures, for example, in addition to SGCNTs.

<Compound A>

Any organic compound can be used as the compound A without any specific limitations so long as it is a compound that has a vapor pressure at 25°C of 1.0 kPa or less and includes an aromatic ring and so long as conditions related to Hansen solubility parameter distance described further below are satisfied.

The aromatic ring of the compound A has excellent affinity with the CNTs. This promotes disentanglement of bulk structures of the CNTs and makes it possible to achieve better dispersion of the CNTs in the elastomer in an obtained shaped object.

The aromatic ring of the compound A may, more specifically, be a benzene ring, a naphthalene ring, or the like without any specific limitations. Note that the compound A may include one type of aromatic ring or may include two or more types of aromatic rings. In particular, a benzene ring is preferable as the aromatic ring from a viewpoint of causing better dispersion of the CNTs in the elastomer.

Moreover, the compound including an aromatic ring is preferably a compound including an ester group and an aromatic ring from a viewpoint of causing better dispersion of the CNTs in the elastomer in a shaped object. The compound including an ester group and an aromatic ring is preferably a phenyl ester compound and may be a benzoic acid ester compound such as methyl benzoate, benzyl benzoate, or phenyl benzoate, or an alkyl 3-phenylpropionate such as methyl 3-phenylpropionate, for example. Note that one compound A can be used individually, or two or more compounds A can be used as a mixture.

The vapor pressure at 25°C of the compound A is 1.0 kPa or less, and more preferably 0.1 kPa or less. In a situation in which the vapor pressure of the compound A exceeds 1.0 kPa, it is not possible to cause good dispersion of the CNTs in the elastomer in a shaped object that is obtained from the elastomer composition. This is presumed to be because fluidity of the compound A cannot be sufficiently ensured and impregnation of the compound A into bundle structures of the CNTs becomes difficult. The lower limit for the vapor pressure of the compound A is not specifically limited and may be $10^{-5}$ kPa or more, for example.

The boiling point of the compound A is preferably 120°C or higher, and more preferably 150°C or higher. When the boiling point of the compound A is 120°C or higher, excessive vaporization of the compound A does not occur when obtaining an elastomer composition and a shaped object, and the CNTs can be dispersed well in the elastomer in a shaped object that is obtained from the elastomer composition. The upper limit for the boiling point of the compound A is not specifically limited and may be 400°C or lower, for example.

The molecular weight of the compound A is preferably 100 or more, and more preferably 120 or more, and is preferably 500 or less, more preferably 400 or less, and even more preferably 300 or less. When the molecular weight of the compound A is within any of the ranges set forth above, the CNTs can be better dispersed in the elastomer in a shaped object that is obtained from the elastomer composition. This is presumed to be because the compound A can easily impregnate bundle structures of the CNTs.

<<Hansen solubility parameter distance R1>>

The Hansen solubility parameter distance R1 (units: $MPa^{1/2}$) between the compound A and the previously described CNTs is required to be 6.0 $MPa^{1/2}$ or less, and is preferably 5.0 $MPa^{1/2}$ or less, more preferably 4.5 $MPa^{1/2}$ or less, even more preferably 4.0 $MPa^{1/2}$ or less, and particularly preferably 3.5 $MPa^{1/2}$ or less. In a situation in which R1 exceeds 6.0 $MPa^{1/2}$, the CNTs cannot be dispersed well in the elastomer in a shaped object that is obtained from the elastomer composition. This is presumed to be because affinity between the compound A and the CNTs decreases, making it difficult for the compound A to impregnate bulk structures of the CNTs.

The lower limit for the value of R1 is not specifically limited but is preferably 0.5 $MPa^{1/2}$ or more, and more preferably 1.0 $MPa^{1/2}$ or more.

Note that the "Hansen solubility parameter distance R1 (MPa$^{1/2}$) between the carbon nanotubes and the compound A" can be calculated using the following formula (1).

$$R1 = \{4 \times (\delta d3 - \delta d2)^2 + (\delta p3 - \delta p2)^2 + (\delta h3 - \delta h2)^2\}^{1/2} \cdots (1)$$

$\delta$d2: Dispersion term of compound A
$\delta$d3: Dispersion term of carbon nanotubes
$\delta$p2: Polarity term of compound A
$\delta$p3: Polarity term of carbon nanotubes
$\delta$h2: Hydrogen bonding term of compound A
6h3: Hydrogen bonding term of carbon nanotubes

<<Hansen solubility parameter distance R2>>

The Hansen solubility parameter distance R2 (units: MPa$^{1/2}$) between the compound A and the previously described elastomer is required to be larger than R1 as previously described. In a situation in which R2 is not larger than R1, the CNTs cannot be dispersed well in the elastomer in a shaped object that is obtained from the elastomer composition. This is presumed to be because affinity of the compound A with the elastomer increases, making it difficult for the compound A to impregnate bulk structures of the CNTs.

More specifically, R2 is preferably 4.0 MPa$^{1/2}$ or more, and more preferably 4.5 MPa$^{1/2}$ or more, and is preferably 16.0 MPa$^{1/2}$ or less, and more preferably 9.0 MPa$^{1/2}$ or less. When R2 is within any of the ranges set forth above, the CNTs can be better dispersed in the elastomer in a shaped object that is obtained from the elastomer composition.

Note that the "Hansen solubility parameter distance R2 (MPa$^{1/2}$) between the elastomer and the compound A" can be calculated using the following formula (2).

$$R2 = \{4 \times (\delta d1 - \delta d2)^2 + (\delta p1 - \delta p2)^2 + (\delta h1 - \delta h2)^2\}^{1/2} \cdots (2)$$

$\delta$d1: Dispersion term of elastomer
$\delta$d2: Dispersion term of compound A
$\delta$p1: Polarity term of elastomer
$\delta$p2: Polarity term of compound A
$\delta$h1: Hydrogen bonding term of elastomer
$\delta$h2: Hydrogen bonding term of compound A

Note that the definition and calculation method of Hansen solubility parameters are described in the following document: Charles M. Hansen; Hansen Solubility Parameters: A User's Handbook; CRC Press; 2007.

Moreover, in the case of a substance for which literature values for Hansen solubility parameters are unknown, it is simple to estimate the Hansen solubility parameters from the chemical structure of the substance using computer software (Hansen Solubility Parameters in Practice (HSPiP)).

More specifically, using HSPiP Version 3, for example, recorded values may be used in the case of a compound that is recorded in the database, and estimated values may be used in the case of a compound that is not recorded.

<<Content>>

The elastomer composition preferably contains 0.1 parts by mass or more of the previously described compound A, more preferably contains 5 parts by mass or more of the previously described compound A, even more preferably contains 10 parts by mass or more of the previously described compound A, and may contain 20 parts by mass or more of the previously described compound A per 100 parts by mass of the elastomer. Moreover, the elastomer composition preferably contains 60 parts by mass or less of the previously described compound A, more preferably contains 50 parts by mass or less of the previously described compound A, and even more preferably contains 40 parts by mass or less of the previously described compound A per 100 parts by mass of the elastomer. When the content of the compound A in the elastomer composition is within any of the ranges set forth above, the CNTs can be better dispersed in the elastomer in a shaped object that is obtained from the elastomer composition.

The elastomer composition preferably contains 0.1 parts by mass or more of the previously described CNTs, more preferably contains 1 part by mass or more of the previously described CNTs, even more preferably contains 2 parts by mass or more of the previously described CNTs, and may contain 3 parts by mass or more of the previously described CNTs per 100 parts by mass of the elastomer. Moreover, the elastomer composition preferably contains 10 parts by mass or less of the previously described CNTs, more preferably contains 8 parts by mass or less of the previously described CNTs, even more preferably contains 7 parts by mass or less of the previously described CNTs, and may contain 6 parts by mass or less of the previously described CNTs per 100 parts by mass of the elastomer. When the content of the CNTs in the elastomer composition is within any of the ranges set forth above, the CNTs can be better dispersed in the elastomer in a shaped object that is obtained from the elastomer composition.

<Cross-linker>

Any known cross-linker that can cross-link the elastomer in the elastomer composition set forth above can be used without any specific limitations as a cross-linker that is optionally contained in the presently disclosed elastomer composition. Examples of such cross-linkers include sulfuric cross-linkers, peroxide-based cross-linkers, bisphenol-based cross-linkers, and diamine-based cross-linkers.

Note that one cross-linker can be used individually, or two or more cross-linkers can be used as a mixture.

The content of the cross-linker in the elastomer composition can be set as an amount that is typically used in a known elastomer composition without any specific limitations.

<Additives>

Examples of additives that can be used include, but are not specifically limited to, dispersants, antioxidants, heat stabilizers, light stabilizers, ultraviolet absorbers, pigments, colorants, foaming agents, antistatic agents, flame retardants, lubricants, softening agents, tackifiers, plasticizers, mold release agents, deodorants, and perfumes. More specifically, carbon black, silica, talc, barium sulfate, calcium carbonate, clay, magnesium oxide, calcium hydroxide, or the like, for example, may be used as an additive. Note that one additive can be used individually, or two or more additives can be used as a mixture.

The content of additives in the elastomer composition can be set as an amount that is typically used in a known elastomer composition without any specific limitations. For example, the content of additives in the elastomer composition can be set as not less than 5 parts by mass and not more than 40 parts by mass per 100 parts by mass of the elastomer.

(Method of producing elastomer composition)

The presently disclosed elastomer composition set forth above can be produced by the presently disclosed method of producing an elastomer composition, for example. The presently disclosed method of producing an elastomer composition includes a step (mixing step) of mixing the CNTs and the compound A to obtain a mixture containing the CNTs and the compound A and a step (dispersing step) of performing dispersing treatment of a composition in which the mixture obtained in the mixing step and the elastomer are combined.

Note that the presently disclosed method of producing an elastomer composition may also include steps other than the mixing step and the dispersing step described above. For example, addition of a cross-linker, additive, or the like such as previously described and further dispersing treatment may be separately performed after the dispersing step has been performed.

Through the presently disclosed method of producing an elastomer composition, it is possible to disentangle bundle structures of the CNTs and cause good dispersion of the CNTs in the elastomer as a result of dispersing treatment being performed with respect to a composition that contains the elastomer, the CNTs, and the compound A in the dispersing step. Moreover, as a result of the CNTs and the compound A being mixed in the mixing step prior to the dispersing step in the presently disclosed method of producing an elastomer composition, the compound A impregnates the CNTs and facilitates disentanglement of bundle structures of the CNTs such that when dispersing treatment is then performed in the dispersing step, bundle structures of the CNTs can be disentangled well while also causing even better dispersion of the CNTs in the elastomer.

<Mixing step>

In the mixing step, the CNTs and the compound A are mixed to obtain a mixture containing the CNTs and the compound A. Note that depending on the application of the elastomer composition or shaped object, a cross-linker and/or additive may optionally be mixed with the CNTs and the compound A in the mixing step such that the cross-linker and/or additive is contained in the mixture. Also note that mixing of the CNTs and the compound A in the mixing step is normally performed in the absence of the elastomer.

Mixing of the CNTs and the compound A can be performed by any mixing method such as immersion of the CNTs in the compound A, impregnation of the CNTs with the compound A, application of the compound A onto the CNTs, or spraying of the compound A onto the CNTs, for example, without any specific limitations. In particular, it is preferable that the CNTs and the compound A are mixed through impregnation of the CNTs with the compound A from a viewpoint of enabling even better dispersion of the CNTs in the dispersing step.

Although the time for which impregnation of the CNTs with the compound A is performed in the mixing step can be any time, the impregnation time is preferably at least 1 hour, and more preferably at least 10 hours from a viewpoint of enabling even better dispersion of the CNTs in the dispersing step.

The temperature during impregnation of the CNTs with the compound A is also not specifically limited and can be set as a temperature that is not lower than the freezing point of the compound A but lower than the boiling point of the compound A, for example.

Furthermore, impregnation of the CNTs with the compound A is normally performed at standard pressure (1 atm), but is not specifically limited thereto.

<Dispersing step>

In the dispersing step, dispersing treatment is performed with respect to a composition in which the mixture obtained through mixing of the CNTs and the compound A in the mixing step and the elastomer are combined.

Note that depending on the application of the elastomer composition or shaped object, a cross-linker and/or additive may optionally be contained in the composition.

<<Dispersing treatment>>

Any known dispersing treatment can be adopted as the dispersing treatment without any specific limitations so long as it enables dispersion of the CNTs in the elastomer. Such dispersing treatment can, for example, be dispersing treatment through shear stress, dispersing treatment through impact energy, or dispersing treatment resulting in a cavitation effect. Through such dispersing treatment, it is possible to perform dispersing treatment in a comparatively simple manner without the need to perform dispersing treatment in a carbon dioxide atmosphere that is in a supercritical state as in a conventional technique.

Examples of devices that can be used to perform dispersing treatment through shear stress include a two-roll mill and a three-roll mill.

Examples of devices that can be used to perform dispersing treatment through impact energy include a bead mill and a rotor/stator-type disperser.

Examples of devices that can be used to perform dispersing treatment resulting in a cavitation effect include a jet mill and an ultrasonic disperser.

The conditions of the dispersing treatment are not specifically limited and can be set as appropriate within the range of dispersing conditions typically adopted in the above-described devices, for example.

(Cross-linked material)

The presently disclosed cross-linked material is obtained through cross-linking of the above-described elastomer composition that contains a cross-linker.

(Shaped object)

The presently disclosed shaped object is obtained through shaping of the presently disclosed elastomer composition set forth above, and, in particular, through shaping of the cross-linked material set forth above. The presently disclosed shaped object may be a belt, a hose, a gasket, a packing, or an oil seal, for example, without any specific limitations. The presently disclosed shaped object obtained from the presently disclosed elastomer composition set forth above has excellent characteristics such as electrical conductivity, thermal conductivity, and strength as a result of the CNTs being dispersed well in the elastomer. Shaping of the elastomer composition can be performed by any shaping method such as injection molding, extrusion molding, press forming, or roll forming, for example, without any specific limitations.

EXAMPLES

The following provides a more detailed description of the present disclosure through examples. However, the present disclosure is not limited to these examples.

In the examples and comparative examples, the dispersion state of CNTs in an elastomer was evaluated by measuring the surface resistivity of a rubber sheet as described below.

<Surface resistivity>

A resistivity meter (produced by Mitsubishi Chemical Analytech Co., Ltd.; product name: Loresta-GX MCP-T700; probe: LSP) was used to measure the surface resistivity of an obtained rubber sheet at 10 measurement points, an average value was determined from measured values at these 10 points, and this average value was taken to be the surface resistivity of the rubber sheet. In a case in which the surface resistivity exceeded $1.0 \times 10^7$ Ω/sq., a resistivity meter (produced by Mitsubishi Chemical Analytech Co., Ltd.; product name: Hiresta-UX MCP-HT800; probe: UR-SS) was used to measure the surface resistivity of the obtained rubber sheet at 10 measurement points, an average value was determined from measured values at these 10 points, and this average value was taken to be the surface resistivity of the rubber sheet.

A smaller value for the surface resistivity of a rubber sheet (i.e., higher electrical conductivity) can be said to indicate better dispersion of CNTs in an elastomer.

(Example 1)

After weighing out 12.0 g (4 parts by mass per 100 parts by mass of FKM described below) of single-walled carbon nanotubes (produced by Zeon Corporation; product name: ZEONANO SG101; specific gravity: 1.7; average diameter: 3.5 nm; average length: 350 μm; BET specific surface area: 1,256 $m^2$/g; G/D ratio: 3.5; convex upward t-plot; Hansen solubility parameters: $\delta d3 = 19.4$, $\delta p3 = 6.0$, $\delta h3 = 4.5$) into a 900 mL glass bottle, 36.0 g (12 parts by mass per 100 parts by mass of FKM described below) of methyl 3-phenylpropionate (produced by Tokyo Chemical Industry Co., Ltd.; Hansen solubility parameters: $\delta d2 = 17.4$, $\delta p2 = 3.8$, 6h2 = 5.1; vapor pressure at 25°C: $5.6 \times 10^{-3}$ kPa; boiling point: 239°C; molecular weight: 178) was added dropwise as a compound A. Next, the glass bottle was left at rest in a 40°C oven for 12 hours so as to cause impregnation of the single-walled CNTs with methyl 3-phenylpropionate and obtain a mixture A containing the single-walled CNTs and methyl 3-phenylpropionate.

Next, 300 g of FKM (vinylidene fluoride rubber; Viton GBL600S produced by the Chemours Company; Hansen solubility parameters: $\delta d1 = 14.7$, $\delta p1 = 9.0$, $\delta h1 = 2.7$) as an elastomer was water cooled, was wrapped around a 6-inch open roll (two-roll mill) adjusted to a roll gap of 0.5 mm, and the above-described mixture A was subsequently added thereto so as to obtain a composition in which the mixture A and the elastomer were combined. This composition was kneaded for 60 minutes to perform dispersing treatment and obtain a rubber sheet that was a composite of the FKM, single-walled CNTs, and methyl 3-phenylpropionate.

Note that the Hansen solubility parameter distance R1 between the single-walled CNTs and methyl 3-phenylpropionate was 3.5 $MPa^{1/2}$, and the Hansen solubility parameter distance R2 between FKM and methyl 3-phenylpropionate was 5.1 $MPa^{1/2}$.

The surface resistivity of the obtained rubber sheet was measured. The result is shown in Table 1.

(Example 2)

A rubber sheet was produced and surface resistivity was measured in the same way as in Example 1 with the exception that the amount of methyl 3-phenylpropionate was set as 72.0 g (24 parts by mass per 100 parts by mass of FKM described above). The result is shown in Table 1.

(Example 3)

A rubber sheet was produced and surface resistivity was measured in the same way as in Example 1 with the exception that the amount of methyl 3-phenylpropionate was set as 120.0 g (40 parts by mass per 100 parts by mass of FKM described above). The result is shown in Table 1.

(Example 4)

A rubber sheet was produced and surface resistivity was measured in the same way as in Example 1 with the exception that 72.0 g (24 parts by mass per 100 parts by mass of FKM) of methyl benzoate (Hansen solubility parameters: $\delta d2 = 18.1$, $\delta p2 = 6.8$, $\delta h2 = 5.0$; vapor pressure at 25°C: $5.0 \times 10^{-2}$ kPa; boiling point: 200°C; molecular weight: 136) was used instead of methyl 3-phenylpropionate. The result is shown in Table 1.

Note that the Hansen solubility parameter distance R1 between the single-walled CNTs and methyl benzoate was 2.2 $MPa^{1/2}$, and the Hansen solubility parameter distance R2 between FKM and methyl benzoate was 5.6 $MPa^{1/2}$.

(Example 5)

A rubber sheet was produced and surface resistivity was measured in the same way as in Example 1 with the exception that 72.0 g (24 parts by mass per 100 parts by mass of FKM) of benzyl benzoate (Hansen solubility parameters: $\delta d2$ = 18.7, $\delta p2$ = 5.1, $\delta h2$ = 3.9; vapor pressure at 25°C: $6.0 \times 10^{-2}$ kPa; boiling point: 324°C; molecular weight: 212) was used instead of methyl 3-phenylpropionate. The result is shown in Table 1.
Note that the Hansen solubility parameter distance R1 between the single-walled CNTs and benzyl benzoate was 0.5 MPa$^{1/2}$, and the Hansen solubility parameter distance R2 between FKM and benzyl benzoate was 7.2 MPa$^{1/2}$.

(Example 6)

The rubber sheet produced in Example 2 was wrapped around an open roll, 3 parts by mass of zinc oxide (JIS Grade 2 zinc white) as a cross-linking aid, 5 parts by mass of triallyl isocyanurate (TAIC M-60 produced by Mitsubishi Chemical Corporation) as a co-cross-linker, and 2 parts by mass of 2,5-dimethyl-2,5-di(t-butylperoxy)hexane (PERHEXA 25B40 produced by NOF Corporation) as a cross-linker were added and kneaded therewith, the resultant rubber composition was subsequently subjected to primary vulcanization (160°C × 15 min) and secondary vulcanization (232°C × 2 hr), and then a sheet-like shaped object was obtained.

(Comparative Example 1)

A rubber sheet was produced and surface resistivity was measured in the same way as in Example 1 with the exception that 72.0 g (24 parts by mass per 100 parts by mass of FKM) of methyl salicylate (Hansen solubility parameters: $\delta d2$ = 18.7, $\delta p2$ = 8.7, $\delta h2$ = 10.2; vapor pressure at 25°C: $1.5 \times 10^{-2}$ kPa; boiling point: 222°C; molecular weight: 152) was used instead of methyl 3-phenylpropionate. The result is shown in Table 1.
Note that the Hansen solubility parameter distance R1 between the single-walled CNTs and methyl salicylate was 7.0 MPa$^{1/2}$, and the Hansen solubility parameter distance R2 between FKM and methyl salicylate was 8.2 MPa$^{1/2}$.

(Comparative Example 2)

A rubber sheet was produced and surface resistivity was measured in the same way as in Example 1 with the exception that 72.0 g (24 parts by mass per 100 parts by mass of FKM) of toluene (Hansen solubility parameters: $\delta d2$ = 18.0, $\delta p2$ = 2.6, $\delta h2$ = 3.3; vapor pressure at 25°C: 3.8 kPa; boiling point: 111°C; molecular weight: 92) was used instead of methyl 3-phenylpropionate. The result is shown in Table 1.
Note that the Hansen solubility parameter distance R1 between the single-walled CNTs and toluene was 3.4 MPa$^{1/2}$, and the Hansen solubility parameter distance R2 between FKM and toluene was 7.2 MPa$^{1/2}$.

(Comparative Example 3)

A rubber sheet was produced and surface resistivity was measured in the same way as in Example 1 with the exception that 72.0 g (24 parts by mass per 100 parts by mass of FKM) of cyclohexanone (Hansen solubility parameters: $\delta d2$ = 17.9, $\delta p2$ = 8.3, $\delta h2$ = 4.6; vapor pressure at 25°C: $5.8 \times 10^{-1}$ kPa; boiling point: 156°C; molecular weight: 98) was used instead of methyl 3-phenylpropionate. The result is shown in Table 1.
Note that the Hansen solubility parameter distance R1 between the single-walled CNTs and cyclohexanone was 3.4 MPa$^{1/2}$, and the Hansen solubility parameter distance R2 between FKM and cyclohexanone was 5.5 MPa$^{1/2}$.

(Comparative Example 4)

A rubber sheet was produced and surface resistivity was measured in the same way as in Example 1 with the exception that 72.0 g (24 parts by mass per 100 parts by mass of FKM) of methyl ethyl ketone (Hansen solubility parameters: $\delta d2$ = 15.6, $\delta p2$ = 7.8, $\delta h2$ = 5.5; vapor pressure at 25°C: $1.3 \times 10$ kPa; boiling point: 80°C; molecular weight: 72) was used instead of methyl 3-phenylpropionate. The result is shown in Table 1.
Note that the Hansen solubility parameter distance R1 between the single-walled CNTs and methyl ethyl ketone was 7.0 MPa$^{1/2}$, and the Hansen solubility parameter distance R2 between FKM and methyl ethyl ketone was 1.2 MPa$^{1/2}$.

Table 1

| | | | Example 1 | Example 2 | Example 3 | Example 4 | Example 5 | Example 6 | Comparative Example 1 | Comparative Example 2 | Comparative Example 3 | Comparative Example 4 |
|---|---|---|---|---|---|---|---|---|---|---|---|---|
| Elastomer | FKM Viton GBL600S | Parts by mass | 100 | 100 | 100 | 100 | 100 | 100 | 100 | 100 | 100 | 100 |
| CNTs | SGCNTs | Parts by mass | 4 | 4 | 4 | 4 | 4 | 4 | 4 | 4 | 4 | 4 |
| Liquid compound (compound A) | TAIC | Parts by mass | - | - | - | - | - | - | - | - | - | - |
| | Methyl 3-phenylpropionate | Parts by mass | 12 | 24 | 40 | - | - | 24 | - | - | - | - |
| | Methyl benzoate | Parts by mass | - | - | - | 24 | - | - | - | - | - | - |
| | Benzyl benzoate | Parts by mass | - | - | - | - | 24 | - | - | - | - | - |
| | Methyl salicylate | Parts by mass | - | - | - | - | - | - | 24 | - | - | - |
| | Toluene | Parts by mass | - | - | - | - | - | - | - | 24 | - | - |
| | Cyclohexanone | Parts by mass | - | - | - | - | - | - | - | - | 24 | - |
| | Methyl ethyl ketone | Parts by mass | - | - | - | - | - | - | - | - | - | 24 |
| Cross-linking system | ZnO | Parts by mass | - | - | - | - | - | 3 | - | - | - | - |
| | TAIC M-60 | Parts by mass | - | - | - | - | - | 5 | - | - | - | - |
| | PERHEXA 25B40 | Parts by mass | - | - | - | - | - | 2 | - | - | - | - |

(continued)

| Parameters | | | Example 1 | Example 2 | Example 3 | Example 4 | Example 5 | Example 6 | Comparative Example 1 | Comparative Example 2 | Comparative Example 3 | Comparative Example 4 |
|---|---|---|---|---|---|---|---|---|---|---|---|---|
| Parameters | R1 (distance between CNTs and compound A) | $MPa^{1/2}$ | 3.5 | 3.5 | 3.5 | 2.2 | 0.5 | 3.5 | 7.0 | 3.4 | 3.4 | 7.0 |
| | R2 (distance between elastomer and compound A) | $MPa^{1/2}$ | 5.1 | 5.1 | 5.1 | 5.6 | 7.2 | 5.1 | 8.2 | 7.2 | 5.5 | 1.2 |
| | Vapor pressure (25°C) | kPa | $5.6 \times 10^{-3}$ | $5.6 \times 10^{-3}$ | $5.6 \times 10^{-3}$ | $5.0 \times 10^{-2}$ | $6.0 \times 10^{-2}$ | $5.6 \times 10^{-3}$ | $1.5 \times 10^{-2}$ | 3.8 | $5.8 \times 10^{-1}$ | $1.3 \times 10$ |
| | Inclusion of aromatic ring | - | ○ | ○ | ○ | ○ | ○ | ○ | ○ | ○ | × | × |
| | Phenyl ester compound | - | ○ | ○ | ○ | ○ | ○ | ○ | ○ | × | × | × |
| Effect | Surface resistivity | Ω/sq. | $2.4 \times 10$ | $1.4 \times 10$ | $1.0 \times 10$ | $2.6 \times 10$ | $4.6 \times 10$ | 4.7 | $2.0 \times 10^3$ | $1.5 \times 10^3$ | $4.3 \times 10^3$ | $6.3 \times 10^7$ |

It can be seen from Table 1 that in Examples 1 to 6, rubber sheets having low surface resistivity compared to Comparative Examples 1 to 4 were obtained (i.e., CNTs could be dispersed well in an elastomer).

INDUSTRIAL APPLICABILITY

According to the present disclosure, it is possible to provide an elastomer composition that makes it possible to form a shaped object having good dispersion of carbon nanotubes in an elastomer, a method of producing this elastomer composition, and so forth. Moreover, according to the present disclosure, it is possible to provide a shaped object having good dispersion of carbon nanotubes in an elastomer.

**Claims**

1. An elastomer composition comprising an elastomer, carbon nanotubes, and a compound A, wherein

   the compound A is a compound that has a vapor pressure at 25°C of 1.0 kPa or less and includes an aromatic ring,
   a Hansen solubility parameter distance R1 between the carbon nanotubes and the compound A is 6.0 MPa$^{1/2}$ or less, and
   a Hansen solubility parameter distance R2 between the elastomer and the compound A is larger than R1.

2. The elastomer composition according to claim 1, comprising not less than 0.1 parts by mass and not more than 60 parts by mass of the compound A per 100 parts by mass of the elastomer.

3. The elastomer composition according to claim 1 or 2, comprising not less than 0.1 parts by mass and not more than 10 parts by mass of the carbon nanotubes per 100 parts by mass of the elastomer.

4. The elastomer composition according to any one of claims 1 to 3, wherein the carbon nanotubes include single-walled carbon nanotubes.

5. The elastomer composition according to any one of claims 1 to 4, wherein the compound A is a phenyl ester compound.

6. The elastomer composition according to any one of claims 1 to 5, further comprising a cross-linker.

7. A method of producing the elastomer composition according to any one of claims 1 to 6, comprising:

   a step of mixing the carbon nanotubes and the compound A to obtain a mixture; and
   a step of performing dispersing treatment of a composition in which the mixture and the elastomer are combined.

8. A cross-linked material obtained through cross-linking of the elastomer composition according to claim 6.

9. A shaped object obtained through shaping of the cross-linked material according to claim 8.

<table>
<tr><td colspan="2" align="center">**INTERNATIONAL SEARCH REPORT**</td><td>International application No.<br><br>**PCT/JP2021/032552**</td></tr>
</table>

**A.    CLASSIFICATION OF SUBJECT MATTER**

*C08L 21/00*(2006.01)i; *C08J 3/20*(2006.01)i; *C08K 3/04*(2006.01)i; *C08K 5/10*(2006.01)i; *C08K 7/00*(2006.01)i
FI:    C08L21/00; C08K3/04; C08K7/00; C08K5/10; C08J3/20 Z

According to International Patent Classification (IPC) or to both national classification and IPC

**B.    FIELDS SEARCHED**

Minimum documentation searched (classification system followed by classification symbols)

C08K3/00-13/08; C08L1/00-101/14; C08J3/00-3/28

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

CAplus/REGISTRY (STN)

**C.    DOCUMENTS CONSIDERED TO BE RELEVANT**

| Category* | Citation of document, with indication, where appropriate, of the relevant passages | Relevant to claim No. |
|---|---|---|
| A | JP 2010-192296 A (TOKAI RUBBER INDUSTRIES LTD.) 02 September 2010 (2010-09-02)<br>entire text | 1-9 |
| A | JP 2013-147669 A (TOKAI RUBBER INDUSTRIES LTD.) 01 August 2013 (2013-08-01)<br>entire text | 1-9 |
| A | JP 2019-199583 A (HIROSHIMA UNIVERSITY) 21 November 2019 (2019-11-21)<br>entire text | 1-9 |
| A | JP 2018-203914 A (HIROSHIMA UNIVERSITY) 27 December 2018 (2018-12-27)<br>entire text | 1-9 |
| A | JP 2019-167505 A (ZEON CORP.) 03 October 2019 (2019-10-03)<br>entire text | 1-9 |
| A | JP 2017-186476 A (ZEON CORP.) 12 October 2017 (2017-10-12)<br>entire text | 1-9 |

☑ Further documents are listed in the continuation of Box C.          ☑ See patent family annex.

| | |
|---|---|
| *    Special categories of cited documents: | "T"    later document published after the international filing date or priority date and not in conflict with the application but cited to understand the principle or theory underlying the invention |
| "A"    document defining the general state of the art which is not considered to be of particular relevance | |
| "E"    earlier application or patent but published on or after the international filing date | "X"    document of particular relevance; the claimed invention cannot be considered novel or cannot be considered to involve an inventive step when the document is taken alone |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | |
| "P"    document published prior to the international filing date but later than the priority date claimed | "&"    document member of the same patent family |

| Date of the actual completion of the international search | Date of mailing of the international search report |
|---|---|
| **14 October 2021** | **26 October 2021** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

| International application No. |
| --- |
| **PCT/JP2021/032552** |

**C.    DOCUMENTS CONSIDERED TO BE RELEVANT**

| Category* | Citation of document, with indication, where appropriate, of the relevant passages | Relevant to claim No. |
| --- | --- | --- |
| A | US 2014/0224392 A1 (DU LING,YANG XIAOPING,PULFORD CARL TREVOR ROSS) 14 August 2014 (2014-08-14)<br>entire text | 1-9 |

Form PCT/ISA/210 (second sheet) (January 2015)

INTERNATIONAL SEARCH REPORT
Information on patent family members

International application No.

**PCT/JP2021/032552**

| Patent document cited in search report | | | Publication date (day/month/year) | Patent family member(s) | Publication date (day/month/year) |
|---|---|---|---|---|---|
| JP | 2010-192296 | A | 02 September 2010 | (Family: none) | |
| JP | 2013-147669 | A | 01 August 2013 | (Family: none) | |
| JP | 2019-199583 | A | 21 November 2019 | (Family: none) | |
| JP | 2018-203914 | A | 27 December 2018 | (Family: none) | |
| JP | 2019-167505 | A | 03 October 2019 | (Family: none) | |
| JP | 2017-186476 | A | 12 October 2017 | (Family: none) | |
| US | 2014/0224392 | A1 | 14 August 2014 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018203914 A

- WO 2006011655 A1

**Non-patent literature cited in the description**

- **CHARLES M. HANSEN.** Hansen Solubility Parameters: A User's Handbook. CRC Press, 2007